# EUROPEAN PATENT SPECIFICATION

(11) **EP 3 409 816 B1**
(45) Date of publication and mention of the grant of the patent: **07.02.2024**
(21) Application number: 16887718.1
(22) Date of filing: 29.11.2016
(51) Int. Cl.: B01J 35/00, C25B 1/00, C25B 11/04, B01J 23/22, C25B 1/04, C25B 1/55, C25B 9/19, C25B 9/73

(54) **LARGE-SCALE HYDROGEN GENERATION METHOD THROUGH SOLAR PHOTOCATALYTIC-PHOTOELECTROCATALYTIC DECOMPOSITION OF WATER**
VERFAHREN ZUR WASSERSTOFFERZEUGUNG IM GROSSEN MASSSTAB DURCH SOLARE FOTOKATALYTISCH-FOTOELEKTROKATALYTISCHE ZERSETZUNG VON WASSER
PROCÉDÉ DE PRODUCTION D'HYDROGÈNE À GRANDE ÉCHELLE PAR DÉCOMPOSITION PHOTOCATALYTIQUE-PHOTOÉLECTROCATALYTIQUE SOLAIRE DE L'EAU

(30) Priority: 28.01.2016 CN 201610065543
(43) Date of publication of application: 05.12.2018
(73) Proprietor: Dalian Institute Of Chemical Physics Chinese Academy of Sciences, Dalian, Liaoning 116023 (CN)
(72) Inventor: LI, Can, Dalian Liaoning 116023 (CN); LI, Rengui, Dalian Liaoning 116023 (CN); ZHAO, Yue, Dalian Liaoning 116023 (CN); QIN, Wei, Dalian Liaoning 116023 (CN); DING, Chunmei, Dalian Liaoning 116023 (CN); DONG, Yanbao, Dalian Liaoning 116023 (CN)
(74) Representative: Mewburn Ellis LLP
(86) International application number: PCT/CN2016/107612
(87) International publication number: WO 2017/128847

(56) References cited:
- WO-A1-2013/148996
- CN-A- 104 091 961
- CN-A- 104 711 627
- CN-A- 105 018 958
- US-A- 6 063 258
- US-A1- 2012 267 234
- US-A1- 2014 061 057
- US-A1- 2015 114 843
- C.A LINKOUS ET AL: "Solar photocatalytic H{sub 2} production from water using a dual bed photosystem", PROCEEDINGS OF THE 2001 DOE HYDROGEN PROGRAM REVIEW - NREL/CP-570-30535, 1 October 1996 (1996-10-01), XP055617607, United States
- BAE S W ET AL: "Photocatalytic overall water splitting with dual-bed system under visible light irradiation", INTERNATIONAL JOURNAL OF HYDROGEN ENERGY, ELSEVIER SCIENCE PUBLISHERS B.V., BARKING, GB, vol. 34, no. 8, 10 March 2009 (2009-03-10) , pages 3243-3249, XP026049994, ISSN: 0360-3199, DOI: 10.1016/J.IJHYDENE.2009.02.022 [retrieved on 2009-03-10]

## Description

### Technical Field

The present invention relates to the technical field of production of solar fuel through solar photochemical transformation, and in particular to a technology for realizing large-scale hydrogen production from solar energy through decomposition of water via a photocatalytic and photoelectrocatalytic coupling system.

### Background

Hydrogen as clean energy has the advantages of high combustion value, zero pollution emission and the like, and is often used as a hydrogen source for fuel cells and hydrogen-powered cars. Meanwhile, hydrogen is also a common industrial raw material, and is widely used in synthetic ammonia, petroleum hydrocracking and metallurgy industry. At present, the preparation of hydrogen mostly relies on catalytic reforming reaction (such as C+2H₂O→2H₂+CO₂) which is based on fossil resources. It can be seen that 3 tons of coal will be consumed for production of 1 ton of H₂, and 11 tons of CO₂ are also generated at the same time. Such a high carbon emission will certainly cause huge impact on the ecological environment of the earth. Obviously, the production of hydrogen from the fossil resources is not a sustainable development strategy either from the perspective of economic efficiency or from the perspective of sustainable development of ecological civilization. The use of fossil energy brings more and more serious energy crisis and environmental problems. Therefore, the development of a hydrogen production technology from renewable energy sources is the fundamental solution to energy and environmental problems.

Solar energy is one of the most abundant clean renewable resources, and production of hydrogen energy through solar energy is considered to be one of the most ideal hydrogen production ways in the future. At present, the main ways to produce hydrogen energy from solar energy include: a powdery photocatalyst system, a photoelectrocatalytic system, a photovoltaic-electrolytic coupling system, etc. The powdery photocatalyst system process has simple process device and low efficiency. The generated hydrogen and oxygen are mixed together, which will bring great potential safety hazard for future application. The separation problem of H₂ and O₂ is a great challenge. The systems with highest efficiency, reported currently include: ultraviolet response La-doped NaTaO₃ catalyst (J.Am.Chem.Soc. 2003, 125, 3082-3089) and visible light response GaN: ZnO photocatalyst (J.Catal. 2008, 254, 198-204), but the conversion efficiency of the system from solar energy to hydrogen energy is still less than 1%, so the system cannot meet industrial requirements. The photoelectrocatalytic system and the photocatalytic water decomposition system need to produce the photocatalyst into the electrode to realize hydrogen production and oxygen production in the cathode and the anode under additional bias. At present, the reported systems with highest efficiency include CoPi/Ba-Ta₃N₅ as a photoanode (conversion efficiency from solar energy to hydrogen energy under the bias of 0.9V is 1.5%) and NiOOH/FeOOH/N-BiVO₄ as a photoanode (conversion efficiency from solar energy to hydrogen energy under the bias of 0.6V is 2.0% (Nat.Commun., 2015, 6, 8769)). However, the hydrogen production technology through photoelectrocatalytic water decomposition has higher cost than that of the powdery photocatalyst system and complicated electrode preparation process. In industrial application, the preparation of large area uniform electrodes has a great challenge.

The BiVO₄ photoanode is coupled with a double-junction GaAs/InGaAsP battery to form a self-driven device. The highest conversion efficiency from solar energy to hydrogen energy can reach 8.1% (Sci.Rep., 2015, 5, 11141), but the cost and the problem of large area preparation of the photoanode and the photovoltaic device limit the further large-scale application of the strategy. The photovoltaic-electrolytic coupling system has the highest conversion efficiency from solar energy to hydrogen energy. The perovskite battery and NiFe composite oxide electrocatalyst coupling system has the hydrogen production efficiency from solar energy of 12.3% (Science, 2014, 345, 1593-1596). The multijunction GaInP/GaAs/Ge battery and electrolysis water coupling system has the hydrogen production efficiency greater than 20 from solar energy (EnergyEnviron.Sci., 2015, 8, 2791-2796).

Although the efficiency exceeds the requirement of industrial application, solar cells have complicated preparation process and expensive required raw material. The cost of the solar cells is far greater than the cost of hydrogen production from fossil energy. Moreover, the process of electrolysis increases the cost of hydrogen production, which makes it difficult to realize large-scale application for this hydrogen production method. To sum up, it is still difficult for the three ways to realize large-area and large-scale industrial application of hydrogen production from solar energy.

Japanese patent (11-157801) and American patent (US006063258A) publish conversion from solar energy to hydrogen energy via a system that uses photocatalysis and electrocatalysis hybridization. However, the patents require additional electric energy input and requires a bias of more than 0.85V. The light absorption ranges of the photocatalysts (WO₃, TiO₂, SrTiO₃, etc.) used in the photocatalysis part are in the ultraviolet part. The WO₃ catalyst with the widest light absorption range is very limited on the use of the solar spectrum, and can only absorb the sunlight below 470 nm, while the number of photons in the solar spectrum below 470 nm is only 3%. Apparent quantum efficiency of WO₃ is at a peak of only 31% as reported currently (RSCAdv., 2014, 4, 8308-8316). The conversion efficiency of the photovoltaic-electrolytic coupling system from solar energy to hydrogen energy is less than 0.5%.

In the present invention, photocatalytic reaction and photocatalytic reaction are driven by sunlight to realize the conversion from solar energy to hydrogen energy, without the need of electric energy input generated by fossil resources. The used photocatalyst greatly enhances absorption for visible light, and the number of solar photons available can reach more than 9%. The apparent quantum efficiency of the photocatalyst under visible light can reach 70%, and the conversion efficiency of the whole reaction from solar energy to hydrogen energy is more than 3%.

### Summary

The purpose of the present invention is to provide a low-cost, high-efficiency and operable large-scale hydrogen production technology through solar photocatalytic-photoelectrocatalytic decomposition of water.

In a first aspect of the present invention there is provided a system for the large-scale production of hydrogen from solar energy through photocatalytic-photoelectrocatalytic decomposition of water, comprising a photocatalytic system and a photoelectrocatalytic system, wherein the photoelectrocatalytic system is composed of a photoelectrocatalytic anode pool and a photoelectrocatalytic cathode pool which are separated by a photoelectrocatalytic ion exchange membrane; the photocatalytic system is a photocatalytic pool; an electrolyte solution containing an electron carrier is loaded in the photocatalytic pool; a powdery photocatalyst is placed or dispersed in the electrolyte solution;
the powdery photocatalyst, when irradiated by sunlight, is capable of converting a soluble high-valence electron carrier into a low-valence electron carrier to realize large area storage of solar energy, to emit oxygen and produce protons; the system being configured such that the electrolyte solution that stores the low-valence electron carrier and the protons can be collected, and then delivered into the photoelectrocatalytic anode pool; an anode of the photoelectrocatalytic anode pool comprises a photocarrier which is used to oxidize the low-valence electron carrier into high-valence electron carrier; hydrogen can be produced by the protons on a cathode of the photoelectrocatalytic cathode pool; the system being configured such that after the hydrogen is collected, the electrolyte solution can be returned to the photocatalytic system for recycle; characterized in that
the photocatalyst is as defined in claim 1; has a regular shape feature, good crystallinity and different exposed crystal surfaces; wherein an oxidation reduction reaction is generated in different sites, and a reverse reaction is effectively inhibited.

In some embodiments, the powdery photocatalyst of the present invention comprises one or more of bismuth vanadate, silver vanadate, indium vanadate, vanadium oxide, tungsten oxide, tungstic acid, silver phosphate, carbonitride, ferric oxide, cuprous oxide, tantalum nitride, tantalum oxynitride, lead chromate, lead titanate, zinc gallium oxygen nitrogen, strontium plumbate and bismuth oxyhalide, and loads an appropriate cocatalyst.

In some embodiments, the soluble high-valence/low-valence electron carrier of the present invention comprises one or more of Fe³⁺/Fe²⁺, Fe(CN)₆³⁻/ Fe(CN)₆⁴⁻, IO₃⁻/I⁻, I₃⁻/I⁻, VO²⁺/VO₂⁺, BQDS/BQDSH, Sn⁴⁺/Sn²⁺, MV²⁺/MV⁺, [Co(bpy)₃]³⁺/[Co(bpy)₃]²⁺ and [Co(phen)₃]³⁺/[Co(phen)₃]²⁺.

In the photocatalyst of the present invention, the shape of a semiconductor photocatalyst is controlled to obtain a photocatalyst with regular shape feature, good crystallinity and different exposed crystal surfaces; and an oxidation reduction reaction is generated in different sites according to an interplanar photogenerated charge separation principle, to effectively inhibit a reverse reaction to improve the photocatalytic water oxidization quantum efficiency.

In the method of using the system provided by the present invention, the photocatalyst generates electrons and protons by oxidizing water under sunlight irradiation; and the electrons and the protons are stored in the electrolyte solution containing the electron carrier, and transferred to an electrolytic cell to conduct a hydrogen production reaction.

In some embodiments, electricity adopted by the photoelectrocatalytic hydrogen production part can be replaced with electric energy supplied by renewable energy sources such as wind energy, solar energy and the like; and the method provided by the present invention and the renewable energy sources have complementary advantages, thereby solving the problem of difficult storage of the renewable energy sources.

In some embodiments, the photoelectrocatalytic system of the present invention, the anode material is one or a combination of more of low-cost hydrogen evolution catalyst (MoS₂, NiₓP, etc.), a platinum electrode, modified carbon paper, fluorine (indium) doped tin oxide (FTO and ITO), an amorphous silicon membrane, an amorphous silicon germanium membrane, a microcrystalline silicon membrane, crystalline silicon, bismuth vanadate, zinc gallium nitrogen oxide, ferric oxide, tantalum oxide and tantalum oxynitride.

In some embodiments, the photoelectrocatalytic electrolyte solution of the present invention is seawater and/or running water containing one or more of phosphate (10-100 mM), nitrate (10-100 mM), sodium chloride (10-50 mM) and metal salt (1-100 mM); and a pH value is 2-12.

In some embodiments, the electrolytic cell for electrolytic hydrogen production through the electric energy provided by the renewable energy sources adopts a two-electrode diaphragm electrode tank; and the diaphragm is an anion exchange membrane.

In some embodiments, the powdery photocatalyst of the present invention is uniformly immobilized on a transparent substrate to make a photocatalyst sheet; and the photocatalyst sheet is placed in an upper layer of a liquid level in the reaction volume. The immobilizing method of the catalyst comprises: placing the powdery photocatalyst in a container; adding a small amount of water to make mucilage; and uniformly brushing the mucilage onto a transparent sticky substrate by using a brush to make a catalyst sheet. The transparent substrate comprises a polyethylene film, a polyvinyl chloride film, a polypropylene film, polydimethylsiloxane, FTO, ITO, common glass, etc. The dosage of the photocatalyst is not more than 20 g/m², and the concentration of the mucilage is 0.001-10 g/mL.

The powdery photocatalyst of the present invention is synthesized through a precipitation method, a hydrothermal synthesis method, a solid-phase synthesis method, a high temperature nitridation method, etc. The synthesis of a nanocrystalline semiconductor photocatalyst with special shape is controlled to enable the semiconductor photocatalyst to have different exposed crystal surfaces to promote separation of the photogenerated charge. Precipitation method: respectively dissolving a predecessor in an acid solution; uniformly stirring and then mixing; adding a structure-directing agent solution; gradually regulating the pH value using an ammonia solution and then stirring; subsequently transferring the solution to a round-bottomed flask and keeping for a certain time under ordinary pressure at specific temperature; and after reaction, conducting centrifugal separation and washing, and drying in an oven,
wherein the concentration of the predecessor is 1-1000 mM; the concentration of the acid solution is 0.1-15 M; the concentration of the structure-directing agent solution is 0.1-10 mM; the pH value is regulated to 0-10; the stirring time is 0.1-5 h; the reaction temperature is 15-200 °C; the reaction time is 0.5-36 h; the drying temperature is 40-80°C; and the drying time is 1-24 h.

Hydrothermal synthesis method: respectively dissolving a predecessor in an acid solution; uniformly stirring and then mixing; adding a structure-directing agent solution; gradually regulating the pH value using an ammonia solution and then stirring; subsequently transferring the solution to a polytetrafluoroethylene reaction kettle and keeping for a certain time at specific temperature; and after reaction, conducting centrifugal separation and washing, and drying in an oven, wherein the concentration of the predecessor is 1-1000 mM; the concentration of the acid solution is 0.1-15 M; the concentration of the structure-directing agent solution is 0.1-10 mM; the pH value is regulated to 0-10; the stirring time is 0.1-5 h; the volume of the hydrothermal kettle is 30-1000 mL; the kettle filling volume is 5%-80%; the reaction temperature is 40-250°C; the reaction time is 0.5-48 h; the drying temperature is 40-80°C; and the drying time is 1-24 h.

Solid-phase synthesis method: mixing a predecessor according to a stoichiometric ratio; uniformly grinding and then transferring the predecessor into a crucible; and placing the predecessor in a muffle furnace for roasting, wherein the addition amount of the predecessor is 0.1 mmol-1000 mmol; the grinding time is 0.2-5 h; the volume of the crucible is 10-500 mL; and the roasting temperature is 300-1200°C. High temperature nitridation method: placing a predecessor in a quartz tube; and processing for 1-5 h under the atmosphere of NH₃ or N₂ at 300-1200 °C, wherein the velocity of flow is 10-300 mL/min; the NH₃ atmosphere is NH₃/Ar gas mixture with NH₃ content of 10-100vol%; and the N₂ atmosphere is N₂/Ar gas mixture with N₂ content of 10-100vol%.

The cocatalyst of the present invention means supporting one or more active ingredients of metal or metal oxide cocatalyst on the powdery photocatalyst. In some embodiments, the supporting amount of the cocatalyst is 0.005-5.0 wt% of the photocatalyst (such as BiVO₄, WO₃, etc.); a supported reducing cocatalyst comprises one or more than two of Pt, Au, Ag, Ir, Cu, Ni, Ru and Rh; and an oxidization cocatalyst comprises one or more than two of IrO₂, CuO, CoOₓ(x=1-2), MnOₓ(x=1-2), NiO, FeOₓ(x=1-2), TiO₂, Coₓ(PO₄)_{y}(x=1-3,y=1-2) and Coₓ(BO₃)_{y}(x=1-3,y=1-2). Supporting is realized through one or more of a photodeposition method, an immersion method, an atomic layer deposition method, an electrodeposition method and a colloid adsorption method.

Compared with the prior art, the present invention has the following advantages:
1. Compared with the traditional hydrogen production technology through fossil energy, the present invention uses clean, abundant and pollution-free solar energy to prepare hydrogen energy with high combustion value, is environmentally friendly, and can realize renewable cycle.
2. Compared with the traditional hydrogen production technology through a powdery photocatalyst system, the present invention has high hydrogen production efficiency, separates reaction spaces of hydrogen production and oxygen production and has no separation problem of hydrogen and oxygen.
3. Compared with a photocatalytic-electrolytic coupling hydrogen production system, the present invention realizes efficient preparation of hydrogen energy under the fully solar drive and has no additional electric energy input.
4. Compared with a hydrogen production technology through photoelectric decomposition of water and photovoltaic-electrolytic coupling, the present invention has simple process, low cost, strong maneuverability and easy realization of large-scale application.
5. The photocatalyst and the photoelectrode material used in the present invention have good stability and can produce hydrogen uninterruptedly for a long time.
6. In the present invention, the photoelectrocatalysis part can be replaced with electric energy supplied by renewable energy sources such as wind energy, solar energy and the like; and the method provided by the present invention and the renewable energy sources have complementary advantages, thereby solving the problem of difficult storage of the renewable energy sources and also producing hydrogen energy with high combustion value and convenient storage and use.
7. The method of the present invention imitates a policy of separating photoreaction space and dark reaction space in photosynthesis of natural green plants, conducts oxidization reaction and reduction reaction in different places respectively and really achieves "Tao follows nature".

The present invention combines the advantages of the photoelectrocatalytic system and the photocatalytic material system, to provide a system for a large-scale hydrogen production method from solar energy through decomposition of water. The whole reaction process is conducted under the drive of sunlight. The method is simple and efficient, easy to separate hydrogen and oxygen, and simple and easy in operation and has industrialization application prospect. Large area collection of solar energy has no special requirement for land, and can be conducted on derelict and barren land as well as large-area saline land of coastal areas. The method has no land competition with the traditional agriculture and makes full use of derelict land to produce clean and pollution-free hydrogen energy. The method of the present invention is similar to the principle of planting crops in agricultural production. After large-area generation (photocatalytic water oxidation), concentrated harvesting (concentrated photoelectrocatalytic production of hydrogen) is conducted, which can be called as a "hydrogen farm" technology, realizing conversion from efficient solar energy to hydrogen energy.

### Brief Description of the Drawings

Fig. 1 is a technical schematic diagram of the present invention.
Fig. 2 is a reaction flow chart of the present invention. (Note: A is a photocatalytic system; B is a photoelectrocatalytic system; B 1 is a photoelectrocatalytic anode pool; B2 is a photoelectrocatalytic ion exchange membrane; and B3 is a photoelectrocatalytic cathode pool)
Fig. 3 is a scanning electron microscope diagram of a BiVO₄ photocatalyst.
Fig. 4 is a UV-Vis spectrogram of a BiVO₄ photocatalyst.
Fig. 5 is a monocrystalline shape feature of part of a semiconductor photocatalyst, showing Cu₂O, Cu₂O and Bi₂Ti₄O₉ successively from left to right on the upper row, and WO₃, SrTiO₃ and TiO₂ successively from left to right on the lower row.
Fig. 6 is a time curve of photocatalytic oxidation reaction of water of a BiVO₄ photocatalyst under Fe³⁺ ion system.
Fig. 7 shows a curve of conversion of Fe3+ ion of a BiVO₄ photocatalyst under irradiation of solar energy and a generating curve of Fe²⁺ ion.
Fig. 8 shows conversion data of Fe³⁺ ion under irradiation of sunlight in different weather situations of Dalian region.
Fig. 9 is a structural schematic diagram of a photoelectrode of photoelectrocatalysis.
Fig. 10 is a voltage-current curve of carbon membrane modified single-junction amorphous silicon photoanode oxidation ferrous ion.
Fig. 11 is a voltage-current curve of carbon membrane modified double-junction amorphous silicon/amorphous silicon germanium photoanode oxidation ferrous ion.
Fig. 12 is a time-current curve of carbon membrane modified double-junction amorphous silicon/amorphous silicon germanium photoanode oxidation ferrous ion under unbiased condition.
Fig. 13 is a hydrogen production activity diagram of carbon membrane modified double-junction amorphous silicon/amorphous silicon germanium photoanode oxidation ferrous ion under unbiased condition.
Fig. 14 is a contrast of voltage-hydrogen evolution curves for electrocatalytic oxidation of Fe²⁺ and electrolysis of water under different biased conditions.

### Detailed Description

To further describe the present invention, the following embodiments are listed.

Description of the technology and the principle of the present invention: the present invention uses the photocatalyst to oxidize water under irradiation of sunlight and simultaneously converts high-valence electron carrier into low-valence electron carrier and generates protons to store solar energy into the electron carrier.

The solution containing the electron carrier and the protons is transferred into the photoelectrochemical pool. The low-valence electron carrier is converted into high-valence electron carrier under the action of photoelectrode, and proton reduction is conducted on a counter electrode to release hydrogen and collect the hydrogen. The converted high-valence electron carrier is transferred into the photocatalyst system and used, which is repeated to realize cycle. The whole system imitates the principle that the photoreaction and the dark reaction in natural photosynthesis are respectively conducted in different places, to separate hydrogen evolution reaction and oxygen evolution reaction. The basic process is:
(1) photocatalytic oxygen production reaction:

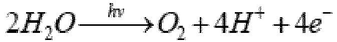

   *Mp*⁺ +*ne*⁻ →*Mq*⁺ (*p* > *q*)
(1) photoelectrochemical hydrogen production reaction:

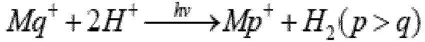

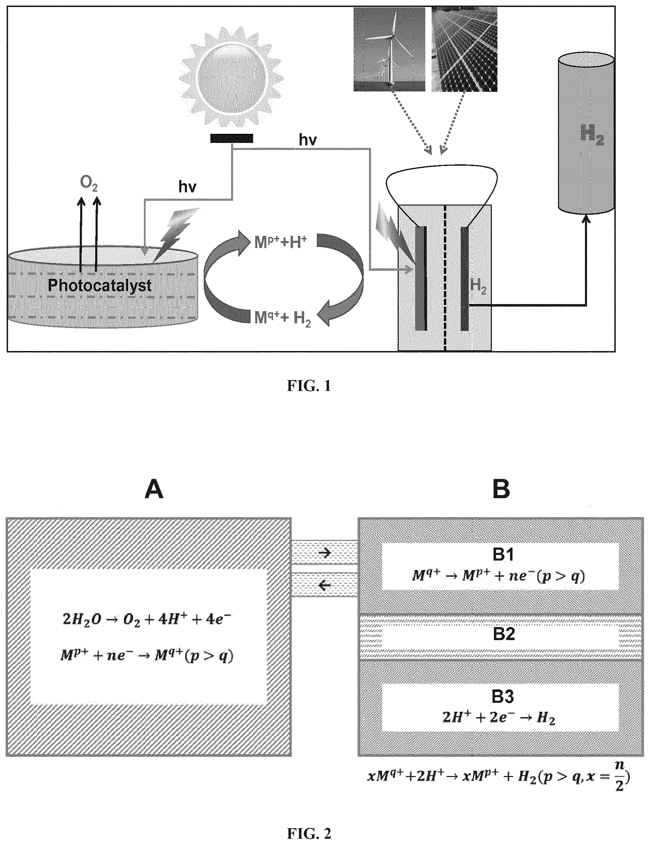

In addition to using the sunlight to drive production of hydrogen, the present invention also indirectly combines with the renewable energy sources to achieve complementary advantages, and uses wind energy, solar energy and the like to provide electric energy to directly replace the photoanode part in photoelectrochemical hydrogen production, thereby solving the storage problem of the renewable energy sources and efficiently obtaining clean hydrogen energy. The technical flow of the present invention is shown in Fig. 1. The reaction flow is shown in Fig. 2.

### Embodiment 1:

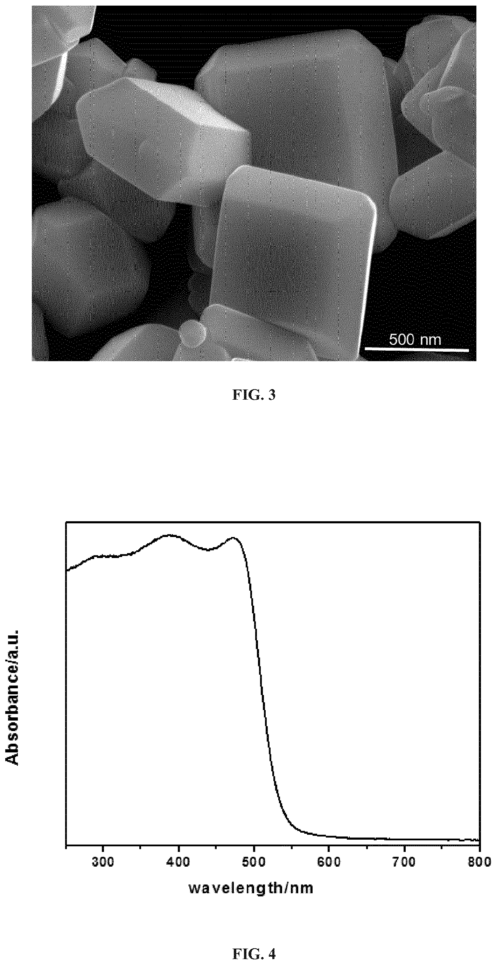

By taking the photocatalyst BiVO₄ of the present invention as an example, the hydrothermal synthesis method and the deposition precipitation method are used for synthesis. The synthetic process comprises: respectively dissolving a bismuth source (100 mM) and a vanadium source (100 mM) in an acid solution; uniformly stirring by volume ratio of 1: 1 and then mixing; adding a structure-directing agent (0.05 mM) solution; gradually regulating the pH value using an ammonia solution and then stirring; subsequently transferring the solution to a round-bottomed flask and keeping for a certain time under ordinary pressure at specific temperature; and after reaction, conducting centrifugal separation and washing, and drying in an oven, wherein the concentration of the bismuth source and the vanadium source is 1-1000 mM (100 mM herein); the concentration of the acid solution is 0.1-15 M (1 M herein); the concentration of the structure-directing agent solution is 0.1-10 mM (1 mM herein); the pH value is regulated to 0-10 (5 herein); the stirring time is 0.1-5 h (3 h herein); the reaction temperature is 15-200°C (60°C herein); the reaction time is 0.5-48 h (36 h herein); the drying temperature is 40-80°C (60°C herein); and the drying time is 1-24 h (24 h herein). The synthesized catalyst has regular shape and exposed crystal surfaces which respectively expose {010} and {110} crystal surfaces. The ratio of the two crystal surfaces is S_{{010}}/[S_{{110}}+S_{{010}}] of 0-1. The apparent quantum efficiency of the photocatalyst in oxidization of water in Fe³⁺ solution can reach as high as 70% (at 420 nm). The shape of the photocatalyst is shown in Fig. 3. The UV-Vis spectrogram of the photocatalyst is shown in Fig. 4.

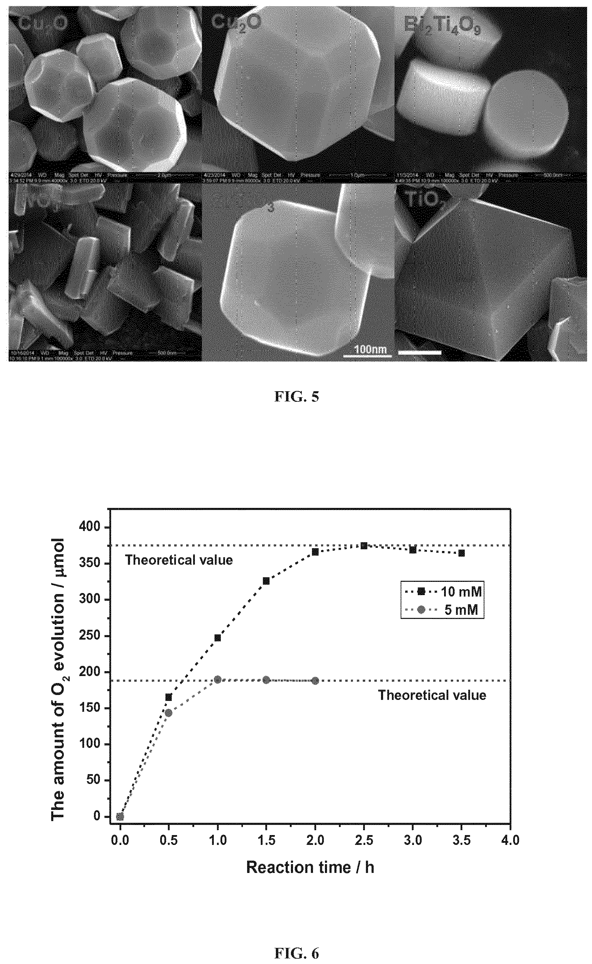

Besides BiVO₄, other semiconductor photocatalyst monocrystals with specific shapes and exposed crystal surfaces are synthesized and used in the present invention. Fig. 5 is a shape diagram of part of a semiconductor photocatalyst.

### Embodiment 2:

Performance assessment of photocatalyst in oxidation reaction of water under different existence conditions of electron carrier

100 mg of photocatalyst is dispersed in 150 mL of different solutions (10 mM) of electron carriers; subsequently, the reaction system is pumped off; under the irradiation of 300W xenon lamp (λ>420nm), sampling and analysis are conducted after the reaction for 1h; on-line detection is made to the gas-phase product obtained in the reaction by gas chromatography; and the conversion rate of the high-valence electron carrier is computed by detecting the amount of the oxygen generated in the oxidation reaction. The result is listed in Table 1.

**Table 1 Reaction Activity of Photocatalyst under Different Existence Conditions of Electron Carrier**

| **Photocatalyst** | **Electron Carrier** | **Reaction Activity** | |
|---|---|---|---|
| | | **Generation Rate of O₂ by Oxidization of Water (mL·h⁻¹g⁻¹)** | **Conversion Rate of High Valence Ion (µmol·h⁻¹g⁻¹)** |
| BiVO₄ | Fe³⁺/Fe²⁺ | 74.2 | 3312.5 |
| BiVO₄ | Fe(CN)₆³⁻/Fe(CN)₆⁴⁻ | 0.4 | 17.9 |
| BiVO₄ | IO₃⁻/I⁻ | 0.1 | 4.5 |
| Pt/BiVO₄ | IO₃⁻/I⁻ | 6.0 | 267.8 |
| WO₃ | Fe³⁺/Fe²⁺ | 8.2 | 366.1 |
| WO₃ | Fe(CN)₆³⁻/Fe(CN)₆⁴⁻ | 0.3 | 13.3 |
| WO₃ | IO₃⁻/I⁻ | 0.1 | 4.5 |
| Pt/WO₃ | IO₃/I⁻ | 0.6 | 26.8 |
| C₃N₄ | Fe³⁺/Fe²⁺ | 0.1 | 4.5 |
| C₃N₄ | IO₃⁻/I⁻ | 0.17 | 8.1 |
| Pt/Ta₃N₅ | IO₃⁻/I⁻ | 0.04 | 1.8 |
| Ir/Ta₃N₅ | IO₃⁻/I⁻ | 0.12 | 5.4 |
| Ag₃PO₄ | Fe(CN)₆³⁻/Fe(CN)₆⁴⁻ | 1.8 | 80.3 |
| Ag₃PO₄ | IO₃⁻/I⁻ | 0.7 | 31.2 |
| Ag₃VO₄ | Fe³⁺/Fe²⁺ | 0.4 | 17.9 |
| InVO₄ | Fe³⁺/Fe²⁺ | 0.6 | 26.9 |

### Embodiment 3:

Time-varying assessment of photocatalyst in photocatalytic oxidation reaction of water under Fe³⁺ ion system (taking BiVO₄ photocatalyst as an example)
100 mg of photocatalyst BiVO₄ is dispersed in Fe³⁺ solution (150 mL); subsequently, the reaction system is pumped off; under the irradiation of 300W xenon lamp (λ>420nm), sampling and analysis are conducted after the reaction for certain time; and on-line detection is made to the gas-phase product obtained in the reaction by gas chromatography. Fe³⁺ solutions are respectively selected from 3.5 mM and 10.0 mM. Fe³⁺ can be completely converted into Fe²⁺ through the reactions to generate O₂ of stoichiometric ratio consistent with the theoretical value. It is proved that the photocatalyst can completely convert Fe³⁺ into Fe²⁺, i.e., no reverse reaction exists. Obtained data are shown in Fig. 6.

### Embodiment 4:

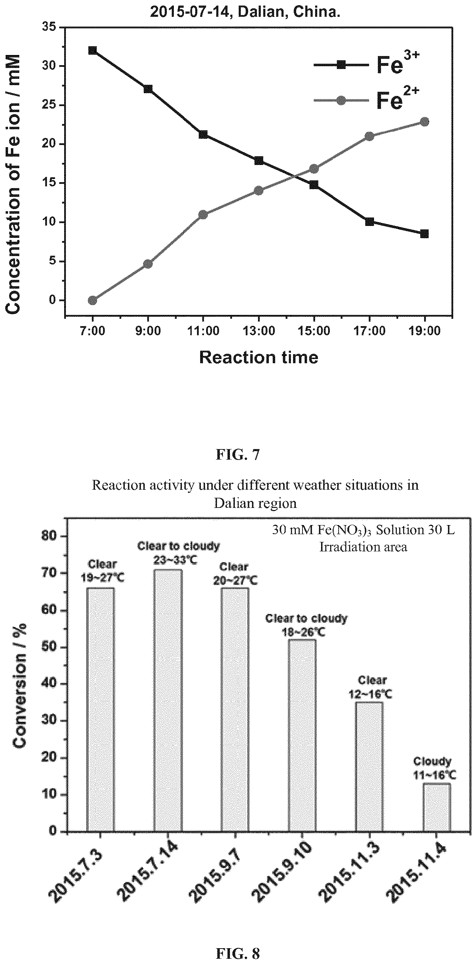

Performance assessment of photocatalyst (taking BiVO₄ as an example) for conversion of Fe³⁺ ion and generation of Fe²⁺ ion under irradiation of sunlight (taking Dalian region as an example)
The photocatalyst BiVO₄ is loaded on a transparent sticky substrate (with an area of 1m×1m); the Fe³⁺ solution (30L, 32 mM) is placed in an open reaction container (1m×1m×0.06m); the immobilized catalyst sheet is placed on the upper layer of the Fe³⁺ solution (30L, 32 mM); the whole apparatus is placed outdoor to react under irradiation of sunlight (taking July 14, 2015 in Dalian region as an example); concentrations of Fe³⁺ ions and Fe²⁺ ions are sampled and analyzed every two hours of the reaction; and the consumption of Fe³⁺ ions is in a linear correlation with the generation of Fe²⁺ ions. Obtained data are shown in Fig. 7.

### Embodiment 5:

Performance assessment of photocatalyst (taking BiVO₄ as an example) for conversion of Fe³⁺ ion under irradiation of solar energy in different times and different weather situations (taking Dalian region as an example)
The photocatalyst BiVO₄ is loaded on a transparent sticky substrate (with an area of 1m×1m); the Fe³⁺ solution (30L, 32 mM) is placed in an open reaction container (1m×1m×0.06m); the immobilized catalyst sheet is placed on the upper layer of the Fe³⁺ solution (30L, 32 mM); the whole apparatus is placed outdoor to react under irradiation of sunlight (taking Dalian region as an example); reactions are conducted at different months and different weather situations; the concentration of Fe³⁺ ions is sampled and analyzed every two hours of the reaction; and the conversion rate of Fe³⁺ in unit area in one day is computed. Obtained data are shown in Fig. 8.

### Embodiment 6:

Assessment of activity of carbon membrane modified single-junction amorphous silicon photoanode oxidation ferrous ion.

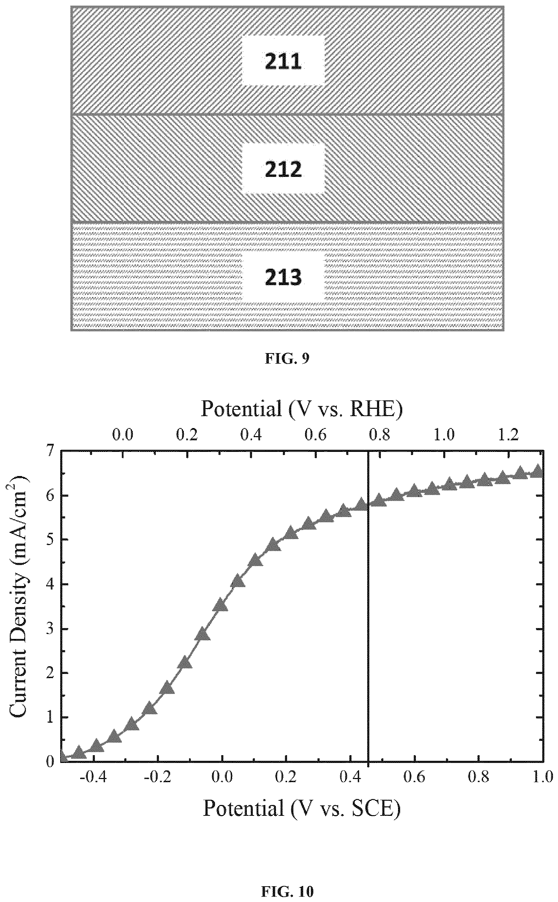

The single-junction amorphous silicon photoanode has nip structure; the substrate is FTO glass; and a carbon membrane is prepared by magnetron sputtering on the surface for modification (the structure of the photoanode is shown in Fig. 9). The solution containing the ferrous ion after the photocatalytic reaction (examples 4-6) is taken to use hydrochloric acid to prepare solution with a pH of 1. The photoanode is irradiated by using a solar simulator (100mW/cm²) as a light source. The voltage-current characteristics of the photoanode are shown in Fig. 10.

### Embodiment 7:

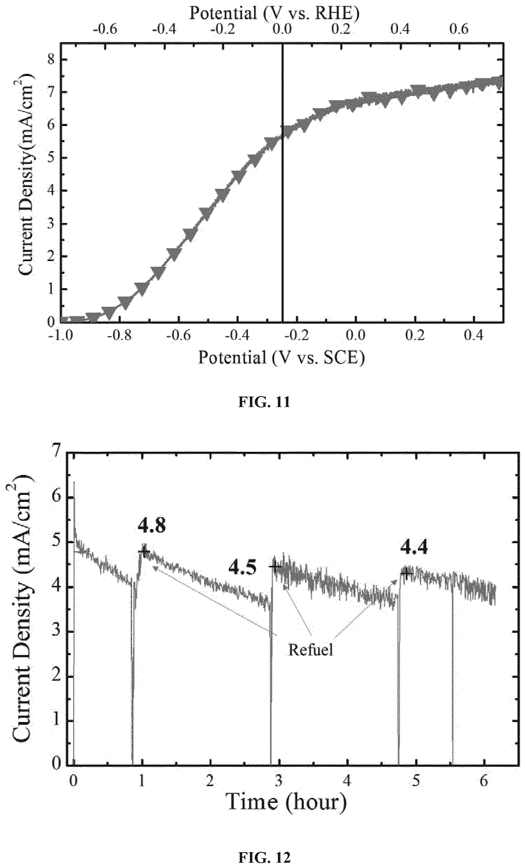

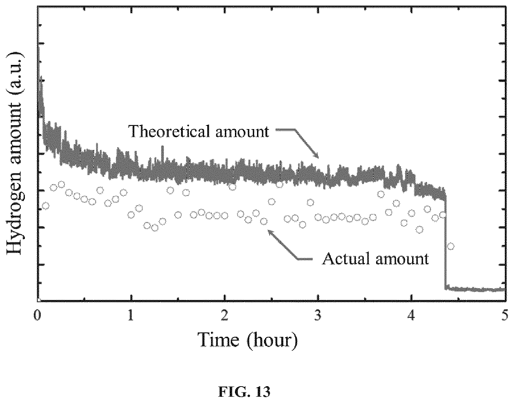

Assessment of activity of double-junction amorphous silicon/amorphous silicon germanium photoanode oxidation ferrous ion. The double-junction amorphous silicon/amorphous silicon germanium photoanode has nip/nip structure; the substrate is FTO glass; and a carbon membrane is prepared by magnetron sputtering on the surface for modification. The solution containing the ferrous ion after the photocatalytic reaction (examples 4-6) is taken to use hydrochloric acid to prepare solution with a pH of 1. The photoanode is irradiated by using a solar simulator (100mW/cm²) as a light source. The voltage-current characteristics of the photoanode are shown in Fig. 11. The test result of stability is shown in Fig. 12.. The activity of produced hydrogen is shown in Fig. 13.

### Embodiment 8:

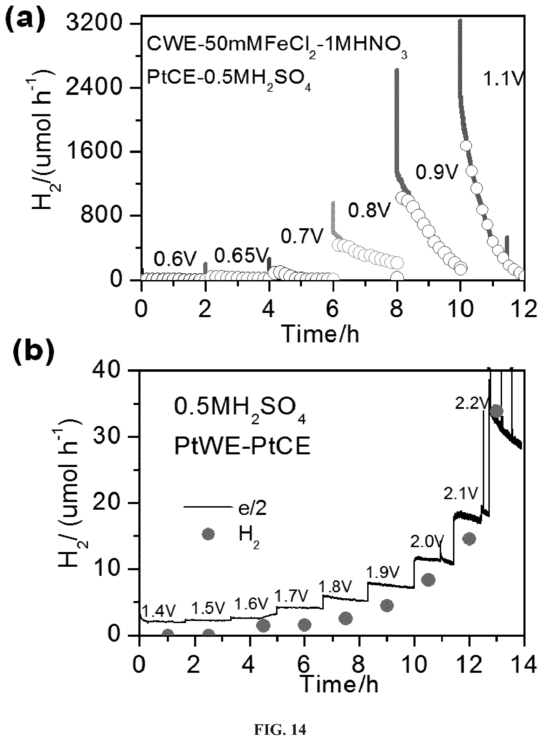

Contrast between activities of hydrogen generated by electrocatalytic oxidation of Fe²⁺ and electrolysis of water under different biases
Hydrogen production through electrocatalytic oxidation of Fe²⁺ at different voltages: a two-electrode system of nafion117 membrane is adopted; the working electrode electrolytic solution is 55mL 50m MFeCl₂-1M HNO₃; the counter electrode is 40mL 0.5M H₂SO₄; the working electrode is carbon paper; the counter electrode is Pt sheet; different constant voltages are set for electrolysis; hydrogen production amount is tested; and hydrogen is generated at bias of 0.7V. The result is shown in Fig. 14a.

Generation of hydrogen through electrolysis of water at different voltages: the two-electrode system of nafion117 membrane is adopted; the electrolytic solution is 0.5M H₂SO₄; the working electrode and the counter electrode are Pt sheets; and stepped potentials are set for electrolysis. The result is shown in Fig. 14b. When H₂ is emitted, the corresponding bias is 1.6V; and the hydrogen production rate of 10 µ molh⁻¹ needs a bias more than 1.9V. It can be seen from the contrast of two groups of results that, after the electron carrier is adopted in the present invention, compared with the traditional production of hydrogen through electrolysis of water, the required voltage is greatly reduced (the voltage is saved by about 1.0V).

### Embodiment 9:

Hydrogen production through electrocatalytic oxidation of Fe²⁺ and primary amplification experiment in anionic membrane electrolytic cell
Ethylene is adopted to graft a two-electrode system of a polystyrene quaternary ammonium type anion exchange membrane; the working electrode electrolytic solution contains 50mM FeCl₂ of 0.1M NaCl (pH2) or 1M HCl solution; the counter electrode is 40mL 0.1M Na₂SO₄ (pH2) or 0.5 MH₂SO₄ solution; the working electrode is carbon paper roasted in air; the counter electrode is carbon paper Pt/C that loads Pt black; the constant voltage is 1V; electrolysis is conducted at different temperatures; hydrogen production amount is tested; and Faradic efficiency and hydrogen yield are computed. The result is shown in Table 2. Under the assistance of voltage of 1V, the hydrogen yield for oxidization of Fe²⁺ ion can reach as high as 98%, wherein when strong acid is used as the electrolytic solution, the reaction is conducted for 2h only. The unreacted Fe²⁺ is only 0.5%. The infiltration capacity of Fe²⁺/³⁺ for the counter electrode is 0.6%. The segregation effect of the surface anionic membrane for the cation is obtained. When the reaction is amplified from 10 mL, 55 mL to 165 mL, the hydrogen yield is reduced by about 10%.

**Table 2 Performance of Hydrogen Produced by Electrocatalytic Oxidation of Fe²⁺ in Anionic Membrane Electrolytic Cell under Different Conditions**

| **Volume** | **Anode Solution Working Electrode** | **Counter Electrode Solution** | **Reaction Time** | **Faradic Efficiency of Hydrogen** | **Hydrogen Yield** |
|---|---|---|---|---|---|
| 10 mL | 0.1M NaCl pH2 | 0.1M Na₂SO₄ pH2 | 4h | 33% | 92% |
| 10 mL | 1M HCl pH0 | 0.5M H₂SO₄ pH0 | 2h | 51% | 98% |
| 55 mL | 0.1M NaCl pH2 | 0.1M Na₂SO₄ pH2 | 15h | 78% | 70% |
| 55 mL | 1M HCl pH0 | 0.5M H₂SO₄ pH0 | 7.7h | 89% | 92% |
| 165 mL | 0.1M NaCl pH2 | 0.1M Na₂SO₄ pH2 | 15h | 58% | 60% |
| 165 mL | 1M HCl pH0 | 0.5M H₂SO₄ pH0 | 6.7h | 80% | 83% |

### Embodiment 10:

### Computation of solar hydrogen production efficiency of the present invention

Conversion efficiency from solar energy to hydrogen energy:
By taking the BiVO₄ photocatalyst of the present invention as an example, the absorption edge of the photocatalyst is 530 nm (subnumber of sunlight is 9%); quantum efficiency of water oxidization is 70%; the hydrogen yield in photoelectrocatalysis is 100%; and if solar photons used for photocatalysis and photoelectrocatalysis respectively occupy 50% for computation, the conversion efficiency from the solar energy to the hydrogen energy in the present invention is 3.15%.

If the absorption edge of the photocatalyst is 600 nm (subnumber of sunlight is 15%), then the conversion efficiency from the solar energy to the hydrogen energy in the present invention is 5.25%.

If the absorption edge of the photocatalyst is 700 nm (subnumber of sunlight is 21%), then the conversion efficiency from the solar energy to the hydrogen energy in the present invention is 7.35%.

Computation of hydrogen production amount per unit area (computation of measured data of BiVO₄ photocatalyst in Dalian region):
30L of solution with a volume concentration of 25-30 mM can completely convert Fe²⁺ under irradiation of sunlight (taking Dalian region as an example) per day per unit area. If the irradiation area of the solar energy is 1 hectare (10000 m²), then the hydrogen production amount per hectare of area in unit time (1 day) exceeds 100 standard cubic meters.

The whole reaction of the present invention realizes conversion from the solar energy to hydrogen energy under the drive of the sunlight. Through the separation principle of the interplanar photogenerated charge, the apparent quantum efficiency for storing the solar energy for bismuth vanadate photocatalyst oxidization water with controlled shape can reach 70%; the conversion efficiency from the solar energy to the hydrogen energy may be more than 3%; and under irradiation of sunlight on normal fair weather, the hydrogen production amount per hectare of area per day exceeds 100 standard cubic meters. The present invention has low hydrogen production cost, simple device and strong maneuverability, solves the separation problem of hydrogen and oxygen spaces, and is easy in large-scale application. The present invention is similar to the planting of crops in agricultural production in principle. After large-area generation (photocatalytic water oxidation), concentrated harvesting (concentrated photoelectrocatalytic production of hydrogen) is conducted, which can be called as a "hydrogen farm" technology. The present invention provides a low-cost, high-efficiency and large-scale hydrogen production technology from solar energy through composition of water.

## Claims

1. A system for the large-scale production of hydrogen from solar energy through photocatalytic-photoelectrocatalytic decomposition of water, comprising a photocatalytic system and a photoelectrocatalytic system, wherein the photoelectrocatalytic system is composed of a photoelectrocatalytic anode pool and a photoelectrocatalytic cathode pool which are separated by a photoelectrocatalytic ion exchange membrane; the photocatalytic system is a photocatalytic pool; an electrolyte solution containing an electron carrier is loaded in the photocatalytic pool; a powdery photocatalyst is placed or dispersed in the electrolyte solution;
the powdery photocatalyst, when irradiated by sunlight, is capable of converting a soluble high-valence electron carrier into a low-valence electron carrier to realize large area storage of solar energy, to emit oxygen and produce protons; the system being configured such that the electrolyte solution that stores the low-valence electron carrier and the protons can be collected, and then delivered into the photoelectrocatalytic anode pool; an anode of the photoelectrocatalytic anode pool comprises a photocarrier which is used to oxidize the low-valence electron carrier into high-valence electron carrier; hydrogen can be produced by the protons on a cathode of the photoelectrocatalytic cathode pool; the system being configured such that after the hydrogen is collected, the electrolyte solution can be returned to the photocatalytic system for recycle; **characterized in that**
the photocatalyst comprises a monocrystalline semiconductor photocatalyst, has a regular shape feature, good crystallinity and different exposed crystal surfaces; wherein an oxidation reduction reaction is generated in different sites, and a reverse reaction is effectively inhibited.

2. The system according to claim 1, wherein the powdery photocatalyst comprises one or more of bismuth vanadate, silver vanadate, indium vanadate, vanadium oxide, tungsten oxide, tungstic acid, silver phosphate, carbonitride, ferric oxide, cuprous oxide, tantalum nitride, tantalum oxynitride, lead chromate, zinc gallium oxygen nitrogen, lead titanate, strontium plumbate and bismuth oxyhalide;
the electron carrier is a soluble high-valence/low-valence electron carrier and comprises one or more than two of Fe³⁺/Fe²⁺, Fe(CN)₆³⁻/Fe(CN)₆⁴⁻, IO₃⁻/I⁻, I₃⁻/I⁻, VO²⁺/VO₂⁺, BQDS/BQDSH, Sn⁴⁺/Sn²⁺, MV²⁺/MV⁺, [Co(bpy)₃]³⁺/[Co(bpy)₃]²⁺ and [Co(phen)₃]³⁺/[Co(phen)₃]²⁺.

3. The system according to claim 1 or 2, wherein when necessary, the powdery photocatalyst does not load or can load an appropriate cocatalyst to promote a catalytic reaction;
the deposited cocatalyst comprises one or more of Pt, Ag, Au, Rh, Ru, Ni, Cu, MoS₂, WS₂, NiₓP_{y}(x=1-5,y=1-4), CoOₓ(x=1-2), MnOₓ(x=1-2), NiO, FeOₓ(x=1-2), TiO₂, Coₓ(PO₄)_{y}(x=1-3,y=1-2) and Coₓ(BO₃)_{y}(x=1-3,y=1-2); and cheap and abundant materials are selected as much as possible.

4. The system according to claims 1 to 3, wherein
the molar concentration of the electron carrier in the electrolyte solution is 1-100 mM, and the mass concentration of the powdery photocatalyst is 0.1-50 g/L.

5. The system according to claims 1 to 3, wherein the powdery photocatalyst is uniformly immobilized on a transparent substrate to make a photocatalyst sheet; the photocatalyst sheet is placed in an upper layer of a liquid level in the reaction volume; the immobilizing method of the catalyst comprises: placing the powdery photocatalyst in a container; adding water to make mucilage; and uniformly brushing the mucilage onto a transparent sticky substrate to make a catalyst sheet; the powdery photocatalyst is synthesized through a precipitation method, a hydrothermal synthesis method, a solid-phase synthesis method or a high temperature nitridation method.

6. The system according to claims 1 to 4, wherein in the photoelectrocatalytic system, the anode material is one or a combination of low-cost hydrogen evolution catalyst, a platinum electrode, modified carbon paper, fluorine doped tin oxide, indium doped tin oxide, an amorphous silicon membrane, an amorphous silicon germanium membrane, a microcrystalline silicon membrane, crystalline silicon, bismuth vanadate, ferric oxide, tantalum oxide, zinc gallium nitrogen oxide and tantalum oxynitride.

7. The system according to claim 6, wherein the low-cost hydrogen evolution catalyst is one or more of MoS₂ and NiₓP.

8. The system according to claims 1 to 7, wherein in the photoelectrocatalytic system, the electrolyte solution is seawater and/or running water containing one or more of phosphate, nitrate, chlorate and metal salt; and a pH value is 0-12, wherein the phosphate concentration is 10-100 mM, the nitrate concentration is 10-100 mM, the chlorate concentration is 10-50mM, and the metal salt concentration is 1-100 mM.

9. The system according to claims 1 to 8, wherein electric energy can be used to electrolyze the solution containing the electron carrier; the system comprising a hydrogen production electrolytic cell that adopts a two-electrode diaphragm electrode tank; and the diaphragm is an anion exchange membrane.

10. Use of the system according to claims 1 to 9 for the production of hydrogen.

11. Use of the system according to claim 10, comprising irradiating a powdery photocatalyst by sunlight; converting a soluble high-valence electron carrier into a low-valence ion to realize large area storage of solar energy; emitting oxygen and producing electrons; collecting the electron carrier and protons in the electrolyte solution and delivering into the photoelectrocatalytic anode pool; oxidizing the low-valence electron carrier into high-valence electron carrier at an anode of the photoelectrocatalytic anode pool; producing hydrogen by the protons on a cathode of the photoelectrocatalytic cathode pool; collecting the hydrogen; and returning the electrolyte solution to the photocatalytic system for recycle.

12. A method of producing hydrogen comprising use according to any one of claims 10 to 11 of the system according to any one of claims 1 to 9.

## Patentansprüche

1. System zur großtechnischen Produktion von Wasserstoff aus Solarenergie durch photokatalytische-photoelektrokatalytische Zersetzung von Wasser, umfassend ein photokatalytisches System und ein photoelektrokatalytisches System, wobei das photoelektrokatalytische System aus einem photoelektrokatalytischen Anodenpool und einem photoelektrokatalytischen Kathodenpool besteht, die durch eine photoelektrokatalytische lonenaustauschmembran getrennt sind; das photokatalytische System ein photokatalytischer Pool ist; eine Elektrolytlösung, enthaltend einen Elektronenträger, die in den photokatalytischen Pool geladen ist; einen pulverförmigen Photokatalysator, der in der Elektrolytlösung platziert oder darin dispergiert ist;
wobei der pulverförmige Photokatalysator, wenn er mit Sonnenlicht bestrahlt wird, dazu in der Lage ist, einen löslichen Elektronenträger mit hoher Wertigkeit in einen Elektronenträger mit niedriger Wertigkeit umzuwandeln, um eine großflächige Speicherung von Solarenergie zu bewirken, um Sauerstoff zu emittieren und Protonen zu erzeugen; wobei das System so konfiguriert ist, dass die Elektrolytlösung, die den Elektronenträger mit niedriger Wertigkeit und die Protonen speichert, gesammelt und dann an den photoelektrokatalytischen Anodenpool zugeführt werden kann; wobei eine Anode des photoelektrokatalytischen Anodenpools einen Phototräger umfasst, der verwendet wird, um den Elektronenträger mit niedriger Wertigkeit zu einem Elektronenträger mit hoher Wertigkeit zu oxidieren; wobei Wasserstoff durch die Protonen an einer Kathode des photoelektrokatalytischen Kathodenpools erzeugt werden kann; wobei das System so konfiguriert ist, dass die Elektrolytlösung nach dem Gewinnen von Sauerstoff zur Wiederverwendung an das photokatalytische System zurückgeführt werden kann; **dadurch gekennzeichnet, dass**:
der Photokatalysator einen monokristallinen Halbleiter-Photokatalysator umfasst, ein regelmäßiges Formmerkmal, gute Kristallinität und verschiedene freiliegende Kristalloberflächen aufweist; wobei eine Oxidationsreduktionsreaktion an verschiedenen Stellen erzeugt wird und eine Umkehrreaktion wirksam verhindert wird.

2. System nach Anspruch 1, wobei der pulverförmige Photokatalysator eines oder mehrere aus Bismutvanadat, Silbervanadat, Indiumvanadat, Vanadiumoxid, Wolframoxid, Wolframsäure, Silberphosphat, Carbonitirid, Eisen(III)-oxid, Kupfer(I)-oxid, Tantaloxid, Tantaloxynitrid, Bleichromat, Zinkgalliumsauerstoffstickstoff, Bleititanat, Strontiumplumbat und Bismutoxyhalogenid umfasst;
wobei der Elektronenträger ein löslicher Elektronenträger mit hoher Wertigkeit/niedriger Wertigkeit ist und eines oder mehr als zwei aus Fe³⁺/Fe²⁺, Fe(CN)₆³⁻/Fe(CN)₆⁴⁻, IO₃⁻/I⁻, I₃⁻ /I⁻, VO²⁺/VO₂⁺, BQDS/BQDSH, Sn⁴⁺/Sn²⁺, MV²⁺/MV⁺, [Co(bpy)₃]³⁺/[Co(bpy)₃]²⁺ und [Co(phen)₃]³⁺/[Co(phen)₃]²⁺ ist.

3. System nach Anspruch 1 oder 2, wobei, falls nötig, der pulverförmige Photokatalysator nicht mit einem geeigneten Co-Katalysator zum Fördern einer katalytischen Reaktion beladen ist oder beladen werden kann;
der abgeschiedene Co-Katalysator eines oder mehrere aus Pt, Ag, Au, Rh, Ru, Ni, Cu, MoS₂, WS₂, NiₓP_{y}(x = 1-5, y = 1-4), CoOₓ(x = 1-2), MnOₓ(x = 1-2), NiO, FeOₓ(x = 1-2), TiO₂, Coₓ(PO₄)_{y}(x = 1-3, y = 1-2) und Coₓ(BO₃)_{y}(x = 1-3, y = 1-2) ist; und wobei günstige und häufige Materialien so oft wie möglich ausgewählt werden.

4. System nach den Ansprüchen 1 bis 3, wobei
die Molkonzentration des Elektronenträgers in der Elektrolytlösung 1 bis 100 mM beträgt und die Massenkonzentration des pulverförmigen Photokatalysators 0,1 bis 50 g/l beträgt.

5. System nach den Ansprüchen 1 bis 3, wobei der pulverförmige Photokatalysator einheitlich auf einem transparenten Substrat immobilisiert ist, um einen Photokatalysatorfilm zu erzeugen; wobei der Photokatalysatorfilm in einer oberen Schicht eines Flüssigkeitspegels in dem Reaktionsvolumen positioniert wird; wobei das Immobilisierungsverfahren des Katalysators Folgendes umfasst: Platzieren des pulverförmigen Photokatalysators in einem Behälter; Zusetzen von Wasser, um einen Schleim herzustellen; und einheitliches Pinseln des Schleims auf ein transparentes klebriges Substrat, um einen Katalysatorfilm zu erzeugen; wobei der pulverförmige Photokatalysator durch ein Ausfällungsverfahren, ein hydrothermales Syntheseverfahren, ein Festphasensyntheseverfahren oder ein Hochtemperatur-Nitridierungsverfahren synthetisiert wird.

6. System nach den Ansprüchen 1 bis 4, wobei das Anodenmaterial in dem photoelektrokatalytischen System eines oder eine Kombination aus einem kostengünstigen Wasserstoffevolutionskatalysator, einer Platinelektrode, modifiziertem Kohlenstoffpapier, Fluor-dotiertem Zinnoxid, Indium-dotiertem Zinnoxid, einer amorphen Siliciummembran, einer amorphen Siliciumgermaniummembran, einer mikrokristallinen Siliciummembran, kristallinem Silicium, Bismutvanadat, Eisen(III)-oxid, Tantaloxid, Zinkgalliumstickstoffoxid und Tantaloxynitrid ist.

7. System nach Anspruch 6, wobei der kostengünstige Wasserstoffevolutionskatalysator einer oder mehrere aus MoSz und NiₓP ist.

8. System nach den Ansprüchen 1 bis 7, wobei die Elektrolytlösung in dem photoelektrokatalytischen System Meerwasser und/oder Fließwasser ist, das eines oder mehrere aus Phosphat, Nitrat, Chlorat und Metallsalz enthält; und ein pH-Wert davon 0 bis 12 beträgt, wobei die Phosphatkonzentration 10 bis 100 mM beträgt, die Nitratkonzentration 10 bis 100 mM beträgt, die Chloratkonzentration 10 bis 50 mM beträgt und die Metallsalzkonzentration 1 bis 100 mM beträgt.

9. System nach den Ansprüchen 1 bis 8, wobei elektrische Energie verwendet werden kann, um die Lösung, die den Elektronenträger enthält, zu elektrolysieren; wobei das System eine elektrolytische Wasserstoffproduktionszelle umfasst, die einen Zweielektroden-Diaphragmaelektrodentank annimmt; und wobei das Diaphragma eine Anionenaustauschmembran ist.

10. Verwendung eines Systems nach den Ansprüchen 1 bis 9 zur Produktion von Wasserstoff.

11. Verwendung eines Systems nach Anspruch 10, umfassend das Bestrahlen eines pulverförmigen Photokatalysators mit Sonnenlicht; Umwandeln eines löslichen Elektronenträgers mit hoher Wertigkeit in ein Ion mit niedriger Wertigkeit, um eine großflächige Speicherung von Solarenergie zu bewirken; Emittieren von Sauerstoff und Erzeugen von Elektronen; Sammeln des Elektronenträgers und von Protonen in der Elektrolytlösung und Zuführen zu dem photoelektrokatalytischen Anodenpool; Oxidieren des Elektronenträgers mit niedriger Wertigkeit zu einem Elektronenträger mit hoher Wertigkeit an einer Anode des photoelektrokatalytischen Anodenpools; Erzeugen von Wasserstoff durch die Protonen an einer Kathode des photoelektrokatalytischen Kathodenpools; Gewinnen des Wasserstoffs; und Zurückführen der Elektrolytlösung an das photokatalytische System zur Wiederverwendung.

12. Verfahren zur Produktion von Wasserstoff, umfassend eine Verwendung nach einem der Ansprüche 10 bis 11 eines Systems nach einem der Ansprüche 1 bis 9.

## Revendications

1. Système pour la production d'hydrogène à grande échelle à partir de l'énergie solaire par décomposition photocatalytique-photoélectrocatalytique de l'eau, comprenant un système photocatalytique et un système photoélectrocatalytique, dans lequel le système photoélectrocatalytique se compose d'un pool photoélectrocatalytique d'anodes et d'un pool photoélectrocatalytique de cathodes qui sont séparés par une membrane photoélectrocatalytique échangeuse d'ions ; le système photocatalytique est un pool photocatalytique ; une solution d'électrolyte contenant un porteur d'électrons est chargée dans le pool photocatalytique ; un photocatalyseur en poudre est placé ou dispersé dans la solution d'électrolyte ;
le photocatalyseur en poudre, lorsqu'il est irradié par la lumière du soleil, est capable de convertir un porteur d'électrons soluble de valence élevée en un porteur d'électrons de faible valence pour réaliser un stockage d'énergie solaire de grande surface, pour émettre de l'oxygène et produire des protons ; le système étant conçu de sorte que la solution d'électrolyte qui stocke le porteur d'électrons de faible valence et les protons peut être collectée, et ensuite distribuée dans le pool photoélectrocatalytique d'anodes ; une anode du pool photoélectrocatalytique d'anodes comprend un photoporteur qui est utilisé pour oxyder le porteur d'électrons de faible valence en porteur d'électrons de valence élevée ; de l'hydrogène peut être produit par les protons sur une cathode du pool photoélectrocatalytique de cathodes ; le système étant conçu de sorte qu'une fois l'hydrogène collecté, la solution d'électrolyte peut être renvoyée vers le système photocatalytique pour y être recyclée ; **caractérisé en ce que**
le photocatalyseur comprend un photocatalyseur à semiconducteur monocristallin, possède une caractéristique de forme régulière, une bonne cristallinité et différentes surfaces de cristal exposées ; dans lequel une réaction de réduction par oxydation est générée dans des sites différents, et une réaction inverse est inhibée de manière efficace.

2. Système selon la revendication 1, dans lequel le photocatalyseur en poudre comprend un ou plusieurs parmi le vanadate de bismuth, le vanadate d'argent, le vanadate d'indium, l'oxyde de vanadium, l'oxyde de tungstène, l'acide tungstique, le phosphate d'argent, le carbonitrure, l'oxyde ferrique, l'oxyde cuivreux, le nitrure de tantale, l'oxynitrure de tantale, le chromate de plomb, le zinc gallium oxygène azote, le titanate de plomb, le plombate de strontium et l'oxyhalogénure de bismuth ;
le porteur d'électrons est un porteur d'électrons soluble de valence élevée/faible valence et comprend un ou plus de deux parmi Fe³⁺/Fe²⁺, Fe(CN)₆³⁻/Fe(CN)₆⁴⁻, IO³⁻/I⁻, I³⁻/I⁻, VO²⁺/VO₂⁺, BQDS/BQDSH, Sn⁴⁺/Sn²⁺, MV²⁺/MV⁺, [Co(bpy)₃]³⁺/[Co(bpy)₃]²⁺ et [Co(phen)₃]³⁺/[Co(phen)₃]²⁺.

3. Système selon la revendication 1 ou 2, dans lequel lorsque cela est nécessaire, le photocatalyseur en poudre ne charge pas ou peut charger un cocatalyseur approprié pour favoriser une réaction catalytique ;
le cocatalyseur déposé comprend un ou plusieurs éléments parmi Pt, Ag, Au, Rh, Ru, Ni, Cu, MoS₂, WS₂, NiₓP_{y} (x = 1 à 5, y = 1 à 4), CoOₓ (x = 1 à 2), MnOₓ (x = 1 à 2), NiO, FeOₓ (x = 1 à 2), TiO₂, Coₓ(PO₄)_{y} (x = 1 à 3, y = 1 à 2) et Coₓ(BO₃)_{y} (x = 1 à 3, y = 1 à 2) ; et des matériaux bon marché et abondants sont sélectionnés autant que possible.

4. Système selon les revendications 1 à 3, dans lequel
la concentration molaire du porteur d'électrons dans la solution d'électrolyte est de 1 à 100 mM, et la concentration massique du photocatalyseur en poudre est de 0,1 à 50 g/l.

5. Système selon les revendications 1 à 3, dans lequel le photocatalyseur en poudre est immobilisé de manière uniforme sur un substrat transparent pour fabriquer une feuille de photocatalyseur ; la feuille de photocatalyseur est placée dans une couche supérieure d'un niveau de liquide dans le volume réactionnel ; le procédé d'immobilisation du catalyseur comprend : le placement du photocatalyseur en poudre dans un récipient ; l'ajout d'eau pour fabriquer un mucilage ; et l'application de manière uniforme du mucilage sur un substrat collant transparent pour fabriquer une feuille de catalyseur ; le photocatalyseur en poudre est synthétisé par un procédé de précipitation, un procédé de synthèse hydrothermique, un procédé de synthèse en phase solide ou un procédé de nitruration à haute température.

6. Système selon les revendications 1 à 4, dans lequel dans le système photoélectrocatalytique, le matériau d'anode est un ou une combinaison de catalyseur de dégagement d'hydrogène à faible coût, d'une électrode de platine, de papier carbone modifié, d'oxyde d'étain dopé au fluor, d'oxyde d'étain dopé à l'indium, d'une membrane de silicium amorphe, d'une membrane de silicium germanium amorphe, d'une membrane de silicium microcristalline, de silicium cristallin, de vanadate de bismuth, d'oxyde ferrique, d'oxyde de tantale, d'oxyde de zinc gallium et azote et d'oxynitrure de tantale.

7. Système selon la revendication 6, dans lequel le catalyseur de dégagement d'hydrogène à faible coût est un ou plusieurs parmi MoS₂ et NiₓP.

8. Système selon les revendications 1 à 7, dans lequel dans le système photoélectrocatalytique, la solution d'électrolyte est de l'eau de mer et/ou de l'eau du robinet contenant un ou plusieurs parmi du phosphate, du nitrate, du chlorate et un sel métallique ; et une valeur de pH est de 0 à 12, dans lequel la concentration en phosphate est de 10 à 100 mM, la concentration en nitrate est de 10 à 100 mM, la concentration en chlorate est de 10 à 50 mM, et la concentration en sel métallique est de 1 à 100 mM.

9. Système selon les revendications 1 à 8, dans lequel de l'énergie électrique peut être utilisée pour électrolyser la solution contenant le porteur d'électrons ; le système comprenant une cellule électrolytique de production d'hydrogène qui adopte un réservoir d'électrodes à diaphragme à deux électrodes ; et le diaphragme est une membrane échangeuse d'anions.

10. Utilisation du système selon les revendications 1 à 9 pour la production d'hydrogène.

11. Utilisation du système selon la revendication 10, comprenant l'irradiation d'un photocatalyseur en poudre par la lumière du soleil ; la conversion d'un porteur d'électrons soluble de valence élevée en un ion de faible valence pour réaliser un stockage d'énergie solaire de grande surface ; l'émission d'oxygène et la production d'électrons ; la collecte du porteur d'électrons et de protons dans la solution d'électrolyte et la distribution dans le pool photoélectrocatalytique d'anodes ; l'oxydation du porteur d'électrons de faible valence en porteur d'électrons de valence élevée au niveau d'une anode du pool photoélectrocatalytique d'anodes ; la production d'hydrogène par les protons sur une cathode du pool photoélectrocatalytique de cathodes ; la collecte de l'hydrogène ; et le renvoi de la solution d'électrolyte vers le système photocatalytique pour y être recyclée.

12. Procédé de production d'hydrogène comprenant l'utilisation selon l'une quelconque des revendications 10 à 11 du système selon l'une quelconque des revendications 1 à 9.
